# EUROPÄISCHE PATENTANMELDUNG

(11) **EP 2 182 390 A2**
(43) Veröffentlichungstag der Anmeldung: **05.05.2010**
(21) Anmeldenummer: 09174275.9
(22) Anmeldetag: 28.10.2009
(51) Int. Cl.: G01V 3/15

(54) **Ortungsvorrichtung**

(30) Priorität: 29.10.2008 DE 102008043282
(71) Anmelder: Robert Bosch GmbH, 70442 Stuttgart (DE)
(72) Erfinder: Krapf, Reiner, 72770, Reutlingen (DE); Mahler, Michael, 70771, Leinfelden-Echterdingen (DE); Wieland, Christoph, 70563, Stuttgart-Vaihingen (DE); Hoffmann, Ulli, 75223, Niefern-Oeschelbronn (DE)

(57) **Zusammenfassung**

Die Erfindung geht aus von einer Ortungsvorrichtung, insbesondere einem handgeführten Ortungsgerät (12), mit einer Ortungseinheit (14), die zu einer Erfassung eines Vorhandenseins eines in einem Untersuchungsobjekt (16) angeordneten Gegenstands (18) mittels eines Messsignals (20) vorgesehen ist und die zumindest eine Sensoreinheit (22, 24, 26) und eine Steuereinheit (28) mit zumindest zwei Betriebsmodi (30, 32) aufweist.

Es wird vorgeschlagen, dass zumindest ein Betriebsmodus (30) von einem automatischen Betriebsmodus (30) gebildet ist.

## Beschreibung

### Stand der Technik

Die Erfindung geht aus von einer Ortungsvorrichtung nach dem Oberbegriff des Anspruchs 1.

Es ist bereits eine Ortungsvorrichtung mit einer Ortungseinheit bekannt, die zu einer Erfassung eines Vorhandenseins eines in einem Untersuchungsobjekt angeordneten Gegenstands mittels eines Messsignals vorgesehen ist und die zumindest eine Sensoreinheit und eine Steuereinheit mit zumindest zwei Betriebsmodi aufweist.

### Offenbarung der Erfindung

Die Erfindung geht aus von einer Ortungsvorrichtung, insbesondere einem handgeführten Ortungsgerät, mit einer Ortungseinheit, die zu einer Erfassung eines Vorhandenseins eines in einem Untersuchungsobjekt angeordneten Gegenstands mittels eines Messsignals vorgesehen ist und die zumindest eine Sensoreinheit und eine Steuereinheit mit zumindest zwei Betriebsmodi aufweist.

Es wird vorgeschlagen, dass zumindest ein Betriebsmodus von einem automatischen Betriebsmodus gebildet ist. In diesem Zusammenhang soll unter "vorgesehen" insbesondere speziell ausgestattet und/oder speziell ausgelegt und/oder speziell programmiert verstanden werden. Des Weiteren soll unter einer "Steuereinheit" in diesem Zusammenhang insbesondere eine Einheit verstanden werden, die von einer Recheneinheit und/oder einer Kontrolleinheit gebildet sein kann, wobei die Steuereinheit sowohl von einem Prozessor allein als auch insbesondere von einem Prozessor und weiteren Elektronikbauteilen, wie beispielsweise einem Speichermittel, gebildet sein kann. Besonders vorteilhaft kann die Steuereinheit einen Mikrokontroller oder eine digitale Datenauswertung aufweisen, wobei vorteilhafterweise ein Analog-Digital-Wandler der Steuereinheit bzw. dem Mikrokontroller und/oder der digitalen Datenauswertung vorgeschaltet angeordnet ist. Die Sensoreinheit kann hierbei von einer beliebigen, dem Fachmann als sinnvoll erscheinenden Sensoreinheit gebildet sein, wie insbesondere von einer Induktivsensoreinheit, einer Kapazitivsensoreinheit, einer Radarsensoreinheit usw. Des Weiteren kann die Ortungsvorrichtung zwei oder mehr Sensoreinheiten aufweisen, so dass ein Orten unterschiedlicher Gegenstände, wie beispielsweise von Balken, Leitungen, Rohren usw. vorteilhaft erreicht werden kann. Unter einem "Betriebsmodus" soll hierbei insbesondere ein Modus und/oder ein Betriebszustand des Ortungsgeräts und/oder der Ortungseinheit verstanden werden, der vorzugsweise von einem Bediener ausgewählt werden kann und der insbesondere für einen Messbetrieb vorgesehen ist. Ferner soll unter einem "automatischen" Betriebsmodus insbesondere ein Betriebsmodus verstanden werden, der zumindest teilautomatisiert abläuft und in dem Einstellungen, wie insbesondere eine Parameterauswahl und/oder eine Auswahl von Messprogrammen, automatisch von der Steuereinheit getroffen werden, wobei die Steuereinheit hierbei automatisch eine Signalverarbeitung bestmöglichst an Messdaten bzw. sensierten Daten anpasst. Durch diese Ausgestaltung kann vorteilhaft ein für einen Bediener der Ortungsvorrichtung hoher Bedienkomfort erreicht werden, indem ein Messvorgang mittels des automatischen Betriebsmodus nahezu vollständig automatisiert ablaufen kann und damit unerfahrenen Anwendern die Nutzung des Ortungsgeräts auf einfache Weise ermöglicht werden kann.

Des Weiteren wird vorgeschlagen, dass die Steuereinheit in dem automatischen Betriebsmodus nach Erfassen zumindest eines Messparameters durch die Sensoreinheit automatisch zumindest einen Betriebsparameter auswählt. In diesem Zusammenhang soll unter einem "Betriebsparameter" insbesondere ein Parameter und/oder eine Kenngröße verstanden werden, der und/oder die eine Betriebsfunktion, abhängig von einem Wert des Betriebsparameters, beeinflussen kann und/oder der und/oder die von einem einstellbaren Parameter und/oder Kenngröße gebildet ist. Vorzugsweise erfolgt eine Einstellung des Betriebsparameters manuell von dem Bediener und/oder automatisch durch die Steuereinheit. Ferner soll unter einem "Messparameter" insbesondere ein Parameter und/oder eine Kenngröße verstanden werden, der und/oder die aus von der Sensoreinheit erfassten Signalen und/oder Daten ermittelt wird und der und/oder die insbesondere eine Information über den Untersuchungsgegenstand enthalten kann. Der Messparameter kann von einer Höhe und/oder Art eines Signalrauschens, einer Signalamplitude, einer Signalphase oder von einer Ableitung eines Messsignals usw. gebildet sein. Es kann hierbei ein an den Untersuchungsgegenstand angepasster Messbetrieb Zeit sparend eingestellt werden. Vorzugsweise wird zu Beginn eines Messbetriebs zumindest ein Betriebsparameter ausgewählt. Grundsätzlich ist es denkbar, dass bei einem Wechsel des Untersuchungsobjekts ein weiterer Betriebsparameter ausgewählt werden kann.

Ferner wird vorgeschlagen, dass die Ortungsvorrichtung eine Anzeigeeinheit aufweist, wobei eine aktuelle Einstellung und/oder Auswahl des automatischen Betriebsmodus und/oder des zumindest einen Betriebsparameters mittels der Anzeigeeinheit optisch darstellbar ist. Die Anzeigeeinheit ist vorzugsweise von einer optischen Anzeigeeinheit gebildet mit einem oder mehreren Anzeigemitteln, wie beispielsweise ein Display und/oder eine LED und/oder weitere, dem Fachmann als sinnvoll erscheinende Anzeigemittel der Anzeigeeinheit. Zudem ist die Anzeigeeinheit zu einer optischen Informationsübermittlung an einen Bediener der Ortungsvorrichtung vorgesehen, wodurch der Bediener im Betrieb der Ortungsvorrichtung stets über einen aktuell ausgewählten Betriebsmodus informiert werden kann.

Es wird weiterhin vorgeschlagen, dass die Ortungsvorrichtung zumindest zwei unterschiedliche Signalverarbeitungsmodule aufweist, die von der Steuereinheit in zumindest einem der Betriebsmodi auswählbar sind, wodurch vorteilhaft eine Modul basierte Signalverarbeitung durch die Steuereinheit erreicht werden kann. Besonders vorteilhaft sind die einzelnen Signalverarbeitungsmodule separat voneinander von der Steuereinheit auswählbar bzw. ansteuerbar. Unter einem "Signalverarbeitungsmodul" soll hierbei insbesondere ein Modul verstanden werden, das eine Software aufweist, die zu einem Bearbeiten einer insbesondere abgegrenzten und/oder festgelegten Aufgabe innerhalb der Signalverarbeitung vorgesehen ist, wie beispielsweise zu einem Mittelwert bilden, einem Glätten von Sensorsignalen, einem Untergrundabzug, einem Beseitigen eines Signaldrifts, ein Filtern der Sensorsignale, einem Verstärken der Sensorsignale usw.

In einer vorteilhaften Weiterbildung der Erfindung wird vorgeschlagen, dass die Steuereinheit zu einer variablen Abfolge der zumindest zwei Signalverarbeitungsmodule abhängig von zumindest einer Kenngröße eines sensierten Messsignals vorgesehen ist. Es kann hierbei eine besonders vorteilhafte und flexible Signalverarbeitung erreicht werden, die insbesondere bei einer Ortungseinheit mit zumindest zwei unterschiedlich ausgebildeten Sensoreinheiten eine auf die jeweilige Sensoreinheit abgestimmte Signalverarbeitung aufweisen kann. Vorzugsweise ist die Kenngröße des sensierten Messsignals von einer Kenngröße einer Art einer Sensierung und/oder einer Kenngröße einer Frequenz und/oder einer Kenngröße von Störeffekten und/oder weiteren, dem Fachmann als sinnvoll erscheinenden Kenngrößen gebildet. Prinzipiell ist es ferner denkbar, dass in zumindest einem Betriebsmodus der Steuereinheit die einzelnen Signalverarbeitungsmodule in einer festgelegten Reihenfolge nacheinander ablaufen können.

Die einzelnen Signalverarbeitungsmodule können sowohl manuell durch einen Bediener ausgewählt werden als auch besonders vorteilhaft automatisch in dem automatischen Betriebsmodus ausgewählt werden. Vorteilhafterweise ist hierbei die Steuereinheit in dem automatischen Betriebsmodus zu einer automatischen Einstellung zumindest eines Parameters für das ausgewählte Signalverarbeitungsmodul vorgesehen, wodurch insbesondere eine effiziente und Zeit sparende Ansteuerung bzw. Auswahl der einzelnen Signalverarbeitungsmodule erreicht werden kann. Zudem kann hierbei eine an einen aktuellen Messvorgang angepasste Einstellung des Parameters vorteilhaft erfolgen und eine Fehlbedienung durch einen Bediener zudem verhindert werden. Der Parameter kann hierbei von einer Entscheidung, ob das jeweilige Signalverarbeitungsmodul angesteuert wird, gebildet sein und/oder eine Auswahl einer Untergrundbestimmung in den Messsignalen und/oder eine Auswahl eines Signalfilters und/oder eine Auswahl eines Algorithmus für eine Mustersuche eines Gegenstands in den Messsignalen und/oder von weiteren, dem Fachmann als sinnvoll erscheinenden Parametern gebildet sein.

Des Weiteren wird vorgeschlagen, dass die Ortungsvorrichtung zumindest zwei Signalverarbeitungsroutinen für zumindest zwei unterschiedliche Anwendungen aufweist. In diesem Zusammenhang soll unter einer "Signalverarbeitungsroutine" insbesondere eine Software verstanden werden, die eine Signalverarbeitung der von der Sensoreinheit sensierten Messsignale an eine spezielle Anwendung anpasst oder abstimmt, wie insbesondere an das Untersuchungsobjekt und/oder an eine Form des Gegenstands, wie beispielsweise für "nur Metall suchen", "Fußbodenheizung", "Hohllochbausteine", "Beton", "nasse Wand" usw., wobei mittels der Signalverarbeitungsroutinen die einzelnen Signalverarbeitungsroutinen während der Signalverarbeitung aufgerufen werden können. Es kann eine anwendungsbezogene, insbesondere auf ein Untersuchungsobjekt bezogene bzw. abgestimmte, Signalverarbeitung erreicht werden bzw. es kann zudem eine einfache Auswahl durch einen Bediener für einen Messbetrieb getroffen werden und damit ein hoher Komfort der Ortungsvorrichtung erreicht werden.

Die einzelnen Signalverarbeitungsroutinen können sowohl manuell durch einen Bediener ausgewählt werden als auch besonders vorteilhaft automatisch in dem automatischen Betriebsmodus ausgewählt werden. Vorteilhafterweise ist hierbei die Steuereinheit in dem automatischen Betriebsmodus zu einer Auswahl einer geeigneten Signalverarbeitungsroutine für die jeweilige Anwendung vorgesehen, wodurch eine einfache Bedienbarkeit für den Bediener der Ortungsvorrichtung vorteilhaft erreicht werden kann.

In einer weiteren Ausgestaltung der Erfindung wird vorgeschlagen, dass der weitere Betriebsmodus von einem manuellen Betriebsmodus gebildet ist. In diesem Zusammenhang soll unter "manuell" insbesondere verstanden werden, dass eine Entscheidung und/oder eine Auswahl von Parametern von einem Bediener der Ortungsvorrichtung vorgenommen wird. Vorzugsweise weist hierbei die Ortungsvorrichtung eine Eingabeeinheit, wie beispielsweise eine Tastatur usw. auf, mittels der der Bediener eine manuelle Auswahl und/oder Eingabe tätigen kann. Es kann durch diese Ausgestaltung der Erfindung eine vorteilhafte Voreinstellung des Ortungsgeräts, beispielsweise durch eine Auswahl eines Untersuchungsobjekts, für eine Ortungsmessung manuell von dem Bediener eingegeben bzw. vorinstalliert werden.

Es wird ferner vorgeschlagen, dass die Steuereinheit eine Programmiereinheit aufweist, die in dem manuellen Betriebsmodus zu einer Eingabe zumindest einer benutzerdefinierten Signalverarbeitungsroutine vorgesehen ist, wodurch eine vorteilhafte Erweiterung von Systemeinstellungen bzw. Messfunktionen erreicht werden kann. Unter einer "Programmiereinheit" soll hierbei insbesondere eine Einheit verstanden werden, mittels der sowohl neue Signalverarbeitungsroutinen erstellt werden können als auch bestehende Signalverarbeitungsroutinen geändert werden können. Vorzugsweise umfasst die Steuereinheit bzw. die Programmiereinheit ein Speichermittel, das zu einer Speicherung der neuen und/oder der geänderten Signalverarbeitungsroutinen vorgesehen ist.

Besonders vorteilhaft weist die Ortungseinheit zumindest eine Speichereinheit auf, in der ein gewähltes Parameterset in dem manuellen Betriebsmodus und/oder der benutzerdefinierten Signalverarbeitungsroutine speicherbar ist. Die benutzerdefinierte Signalverarbeitungsroutine und/oder das manuell ausgewählte Parameterset des manuellen Betriebsmodus kann dabei temporär oder dauerhaft in der Speichereinheit gespeichert werden.

Zudem wird vorgeschlagen, dass die Steuereinheit in dem automatischen Betriebsmodus zu einer Auswahl der benutzerdefinierten Signalverarbeitungsroutine vorgesehen ist, wodurch eine Funktionsbreite bzw. eine Funktionsauswahl der Ortungsvorrichtung vorteilhaft erhöht werden kann.

Es wird außerdem vorgeschlagen, dass die Ortungsvorrichtung zumindest ein Betätigungselement aufweist, das zu einer Auswahl eines der zumindest zwei Betriebsmodi durch den Bediener vorgesehen ist. Hierbei soll unter einem "Betätigungselement" insbesondere ein Eingabeelement verstanden werden, wie beispielsweise eine Tastatur, ein Drehknopf und/oder weitere, dem Fachmann als sinnvoll erscheinende Eingabeelemente. Es kann hierbei das Ortungsgerät flexibel von dem Bediener eingesetzt werden. Zudem kann das Ortungsgerät aufgrund der Wählbarkeit der einzelnen Betriebsmodi von Bedienern mit unterschiedlichen Fachkenntnissen für eine Ortungsmessung vorteilhaft genutzt werden.

Weiterhin wird vorgeschlagen, dass die Ortungseinheit eine Schnittstelle aufweist, die zu einer Datenübertragung vorgesehen ist. Es kann hierbei eine vorteilhafte Übertragung von zusätzlichen Signalverarbeitungsmodulen und/oder Signalverarbeitungsroutinen über diese Schnittstelle erfolgen. Die Schnittstelle kann hierbei von einer USB-Schnittstelle und/oder einer seriellen Schnittstelle und/oder einem Lesegerät für eine Speicherkarte und/oder einem Bluetooth und/oder von einer Funkverbindung, insbesondere zu einem Computer, und/oder weiteren, dem Fachmann als sinnvoll erscheinenden Schnittstellen gebildet sein.

Ferner wird eine Ortungsvorrichtung vorgeschlagen, insbesondere ein handgeführtes Ortungsgerät, mit einer Ortungseinheit, die zu einer Erfassung eines Vorhandenseins eines in einem Untersuchungsobjekt angeordneten Gegenstands mittels eines Messsignals vorgesehen ist und die zumindest eine Sensoreinheit und eine Steuereinheit mit zumindest zwei Betriebsmodi aufweist, wobei zumindest ein Betriebsmodus von einem manuellen Betriebsmodus gebildet ist.

Des Weiteren wird ein Verfahren mit einem ersten Betriebsmodus und einem zweiten Betriebsmodus vorgeschlagen, wobei der erste Betriebsmodus von einem automatischen Betriebsmodus gebildet wird. Es kann vorteilhaft ein für einen Bediener der Ortungsvorrichtung hoher Bedienkomfort erreicht werden, indem ein Messvorgang mittels des automatischen Betriebsmodus nahezu vollständig automatisiert ablaufen kann und damit auch unerfahrenen Anwendern die Nutzung des Ortungsgeräts auf einfache Weise ermöglicht werden kann.

Des Weiteren wird vorgeschlagen, dass der zweite Betriebsmodus von einem manuellen Betriebsmodus gebildet wird, wodurch eine vorteilhafte Voreinstellung des Ortungsgeräts, beispielsweise durch eine Auswahl eines Parameters eines Untersuchungsgegenstands usw., für eine Ortungsmessung manuell von dem Bediener eingegeben bzw. vorinstalliert werden kann. Vorteilhafterweise kann dieser manuelle Betriebsmodus, insbesondere ausgewählte Daten und/oder Parameter des manuellen Betriebsmodus, gespeichert werden, so dass bei einem Abschalten und/oder bei einem Wechsel von Batterien ein unerwünschter Datenverlust verhindert werden kann. Vorzugsweise werden die von einem Bediener ausgewählten Daten und/oder Parameter des manuellen Betriebsmodus dauerhaft gespeichert, wobei der Bediener jederzeit die ausgewählten Daten und/oder Parameter in dem manuellen Betriebsmodus ändern und erneut abspeichern kann.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ortungsgerät mit einer Ortungseinheit in einer schematischen Ansicht,
- Fig. 2: das Ortungsgerät zusammen mit einem Untersuchungsobjekt in einer Draufsicht und
- Fig. 3: einen Ablauf einer Signalverarbeitung der Ortungseinheit.

### Beschreibung des Ausführungsbeispiels

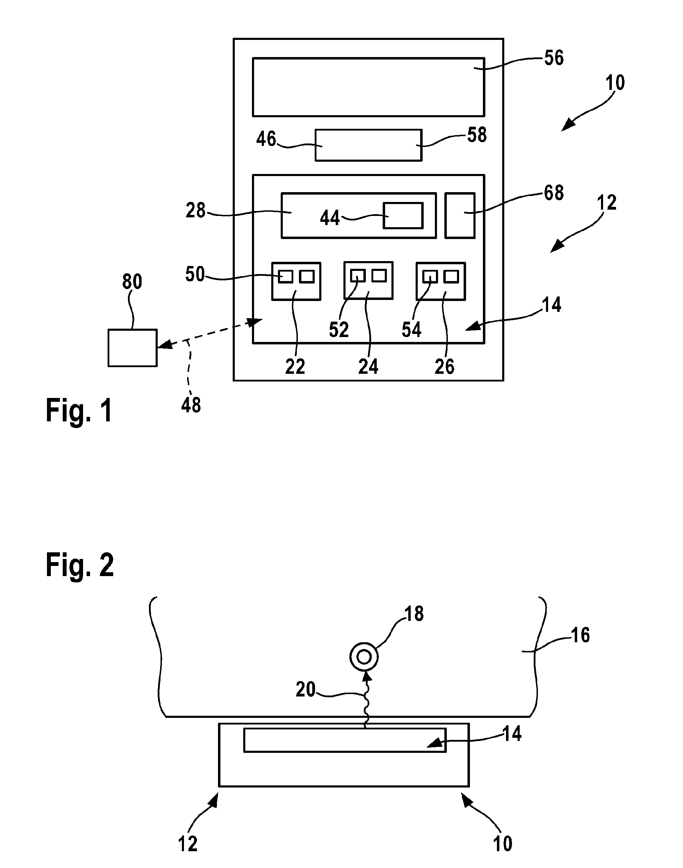

In den Figuren 1 und 2 ist eine von einem handgeführten Ortungsgerät 12 gebildete Ortungsvorrichtung 10 schematisch dargestellt. Das Ortungsgerät 12 weist eine Ortungseinheit 14 auf, die zu einer Erfassung eines Vorhandenseins eines in einem Untersuchungsobjekt 16, wie beispielsweise einer Wand, angeordneten Gegenstands 18 mittels eines Messsignals 20 vorgesehen ist. Hierzu weist die Ortungseinheit 14 drei Sensoreinheiten 22, 24, 26 auf, die zu einem Messen und/oder einem Erzeugen unterschiedlicher Messsignale 20 vorgesehen sind. Die einzelnen Sensoreinheiten 22, 24, 26 unterscheiden sich voneinander in einer Art einer Erfassung von Signalen und sind von einer Kapazitivsensoreinheit, einer Induktivsensoreinheit und einer Radarsensoreinheit gebildet. In einer alternativen Ausgestaltung des Ortungsgeräts 12 ist es denkbar, die Ortungseinheit 14 mit mehr oder weniger als drei Sensoreinheiten 22, 24, 26 auszustatten und/oder dass zumindest eine der Sensoreinheiten 22, 24, 26 eine weitere Art einer Erfassung von Signalen aufweist. Die Sensoreinheiten 22, 24, 26 weisen jeweils mehrere Sensorelemente 50, 52, 54 auf, wobei in einer alternativen Ausgestaltung der Erfindung eine Anzahl der Sensorelemente 50, 52, 54 variieren kann. Des Weiteren weist die Ortungseinheit 14 eine Steuereinheit 28 und eine Anzeigeeinheit 56 auf, die von einem Display gebildet ist und zu einer Anzeige von Messergebnissen und insbesondere von detektierten Gegenständen 18, wie beispielsweise eine in der Wand angeordnete Stromleitung und/oder Wasserleitung usw., und/oder zu einer Anzeige einer Aufforderung zu einer manuellen Eingabe vorgesehen ist.

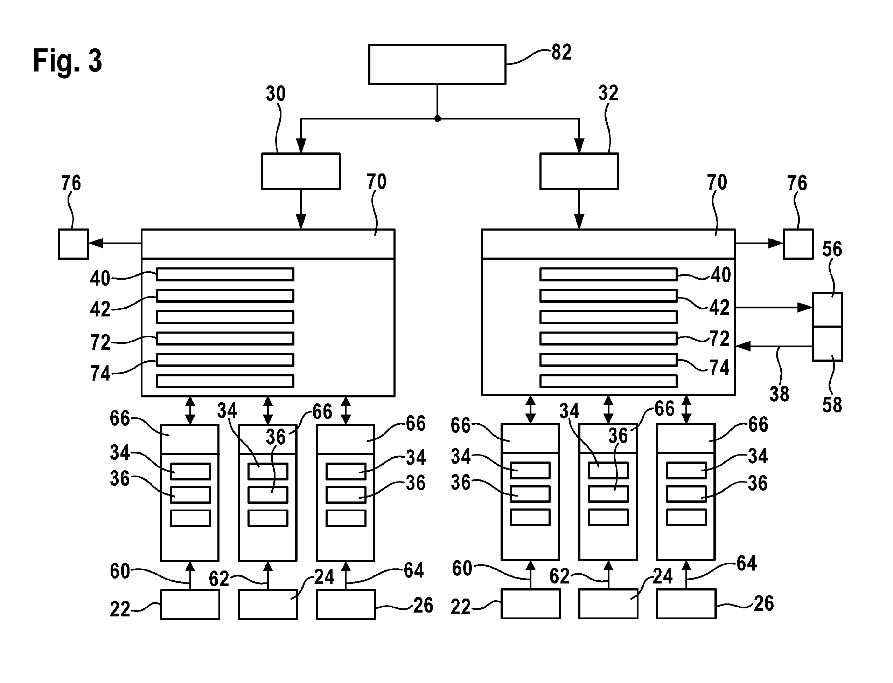

Die Steuereinheit 28 weist zwei Betriebsmodi 30, 32 zu einem Orten von Gegenständen 18 auf, wobei ein erster Betriebsmodus 30 von einem automatischen Betriebsmodus 30 gebildet ist und ein zweiter Betriebsmodus 32 von einem manuellen Betriebsmodus 32 gebildet ist (Figur 3). Zu Beginn eines Betriebs des Ortungsgeräts 12 wird von dem Bediener in einer Betriebsmodiauswahl 82 einer der beiden Betriebsmodi 30, 32 ausgewählt. Hierzu weist das Ortungsgerät 12 ein Betätigungselement 46, das von einer Tastatur 58 des Ortungsgeräts 12 gebildet ist, auf, über die der entsprechende Betriebsmodus 30, 32 ausgewählt werden kann. Sofern keine Eingabe durch den Bediener erfolgt, schaltet das Ortungsgerät 12 in den zuletzt gewählten Betriebsmodus 30, 32. Alternativ könnte auch eine Voreinstellung des automatischen Betriebsmodus 30 möglich sein.

Wird der automatische Betriebsmodus 30 ausgewählt, werden zu Beginn des Messvorgangs erste Sensorsignale mittels den drei Sensoreinheiten 22, 24, 26 erfasst und anhand zumindest einer Kenngröße 60, 62, 64 der Sensorsignale, die insbesondere Informationen über das Untersuchungsobjekt 16 aufweisen kann, ein Betriebsparameter von der Steuereinheit 28 automatisch in dem automatischen Betriebsmodus 30 ausgewählt. Anhand dieses Betriebsparameters werden von der Steuereinheit 28 automatisch unterschiedliche Signalverarbeitungsmodule 34, 36 für eine Signalverarbeitung 70 der Sensorsignale bzw. der Kenngrößen 60, 62, 64 der unterschiedlichen Sensoreinheiten 22, 24, 26 ausgewählt. Hierbei werden von der Steuereinheit 28 abhängig von einer Art der Sensoreinheit 22, 24, 26 und/oder von einer Anzahl von Sensorelementen 50, 52, 54 und/oder von den Sensorsignalen für die einzelnen Sensoreinheiten 22, 24, 26 unterschiedliche Signalverarbeitungsmodule 34, 36 ausgewählt, die zudem in ihrer Abfolge variieren können. In einer alternativen Ausgestaltung der Erfindung ist eine vorgegebene, festgelegte Abfolge der einzelnen Signalverarbeitungsmodule 34, 36 jederzeit denkbar. Die Signalverarbeitungsmodule 34, 36 sind in der Ortungseinheit 14 gespeichert, die hierzu eine Speichereinheit 68 aufweist. Mittels der Anzeigeeinheit 56 wird dem Bediener des Ortungsgeräts 12 eine aktuelle Einstellung und/oder Auswahl des automatischen Betriebsmodus 30 und/oder der automatisch ausgewählten Betriebsparameter optisch angezeigt.

Die einzelnen Signalverarbeitungsmodule 34, 36 sind jeweils für eine festgelegte Aufgabe innerhalb der Signalverarbeitung 66 vorgesehen, wie beispielsweise einen Mittelwert bilden, ein Glätten von Sensorsignalen, einen Untergrundabzug, ein Beseitigen eines Signaldrifts, ein Filtern der Sensorsignale, ein Verstärken der Sensorsignale, ein Entfernen und/oder Unterdrücken von Störsignalen, ein Bestimmen von Schwellenwerten für die einzelnen Sensorelemente 50, 52, 54, ein Zu- oder Abschalten von einzelnen Sensorelementen 50, 52, 54 bzw. der Sensoreinheiten 22, 24, 26, ein Algorithmus für eine Objektmustersuche usw., und weisen hierfür eine spezielle Software auf.

Die von den einzelnen Sensoreinheiten 22, 24, 26 sensierten Sensorsignale werden zunächst in einem ersten Schritt bzw. in einer Signalvorverarbeitung 66 von den von der Steuereinheit 28 ausgewählten Signalverarbeitungsmodulen 34, 36 getrennt ausgewertet (Figur 3). Während eines Ablaufs der einzelnen Signalverarbeitungsmodule 34, 36 sind Entscheidungen zu treffen, wie beispielsweise einen "on"- oder "off"-Parameter für das jeweilige Signalverarbeitungsmodul 34, 36 einzustellen und/oder eine Art einer Untergrundberechnung auszuwählen und/oder eine Art einer Korrekturberechnung auszuwählen und/oder eine Wahl eines Objektmusters und/oder eine Entscheidung zu einer Schwellenanpassung und/oder weitere, dem Fachmann als sinnvoll erscheinende Entscheidungen. Diese Entscheidungen werden in dem automatischen Betriebsmodus 30 automatisch vorgenommen, indem die Steuereinheit 28 einen Parameter oder mehrere Parameter für das ausgewählte Signalverarbeitungsmodul 34, 36 automatisch auswählt und einstellt. Eine Information über eine von der Steuereinheit 28 erfolgte Auswahl von Signalverarbeitungsmodulen 34, 36 und/oder der ausgewählten Parameter wird zudem über die Anzeigeeinheit 56 dem Bediener übermittelt.

In einer weiteren Signalverarbeitung 70 werden in der Steuereinheit 28 die nach dem ersten Schritt vorverarbeiteten Daten der verschiedenen Sensoreinheiten 22, 24, 26 zusammengeführt und weiterverarbeitet. Hierzu werden weitere Signalverarbeitungsmodule 72, 74 von der Steuereinheit 28 ausgewählt, die zu einer Fusion der vorselektierten Daten der verschiedenen Sensoreinheiten 22, 24, 26 vorgesehen sind. Die Signalverarbeitungsmodule 72, 74 können hierbei von Modulen mit einer Software mit einer unscharfen Logik gebildet sein, die insbesondere eine Sensordatenfusion der unterschiedlichen Sensoreinheiten 22, 24, 26 ermöglicht, wobei hierbei Klassifizierungsregeln von dem Bediener eingegeben werden können. Hierzu kann der Bediener über die Anzeigeeinheit 56 über einen aktuellen Status der ausgewählten Parameter informiert werden und/oder über die Anzeigeeinheit 56 aufgefordert werden, einen oder mehrere Parameter über die Tastatur 58 einzugeben. Eine automatische Einstellung mittels der Steuereinheit ist weiterhin jederzeit denkbar. Zudem ist es auch denkbar, dass ein Signalverarbeitungsmodul 72, 74 zu einer Korrektur von Daten einer Sensoreinheit 22, 24, 26 vorgesehen ist, indem hierbei Informationen bzw. Daten der beiden anderen Sensoreinheiten 22, 24, 26 bei der Weiterverarbeitung berücksichtigt werden.

Des Weiteren weist die Steuereinheit 28 mehrere Signalverarbeitungsroutinen 40, 42 auf für unterschiedliche Anwendungsbereiche für das Ortungsgerät 12, wie beispielsweise "Fußbodenheizung", "nur Metall suchen", "Metall und Kabel finden", "Hohllochbausteine", "Beton" usw. Die Signalverarbeitungsroutinen 40, 42 sind in der Speichereinheit 68 gespeichert. Die Steuereinheit 28 wählt in dem automatischen Betriebsmodus 30 für die Signalverarbeitung 70 automatisch anhand der Sensorsignale bzw. der Kenngrößen 60, 62, 64 der Sensorsignale der Sensoreinheiten 22, 24, 26 die zutreffendste Signalverarbeitungsroutine 40, 42 aus, wobei der Bediener über die Anzeigeeinheit 56 über aktuell ausgewählte Signalverarbeitungsroutinen informiert wird. Diese Signalverarbeitungsroutinen 40, 42 können von der Steuereinheit 28 alternativ zu dem zweiten Schritt der Signalverarbeitung 70 ausgewählt werden, sofern eine entsprechende Anwendung von der Steuereinheit 28 erkannt wird bzw. für die entsprechende Anwendung eine Signalverarbeitungsroutine 40, 42 vorliegt bzw. in der Speichereinheit 68 gespeichert ist. Alternativ ist es auch denkbar, dass eine Signalverarbeitung 70 aus einer Kombination einer Signalvorverarbeitung 66 mit Signalverarbeitungsmodulen 34, 36 und mit Signalverarbeitungsroutinen 40, 42 erfolgen kann.

Mittels der Signalverarbeitungsroutine 40, 42 wird eine in der Signalverarbeitungsroutine vorgegebene Abfolge einer Auswahl an Softwareprogrammen und Signalverarbeitungsmodulen 34, 36, 72, 74 festgelegt, die an die Kenngröße 60, 62, 64 der jeweiligen Sensoreinheit 22, 24, 26 angepasst ist. Ein von der Steuereinheit 28 bzw. von der Signalverarbeitung 70 ermitteltes Messergebnis 76 einer Ortungsmessung wird in der Anzeigeeinheit 56 für den Bediener ausgegeben.

Wird der manuelle Betriebsmodus 32 von dem Bediener ausgewählt, hat der Bediener die Möglichkeit, eine individuell eingestellte Messung vorzunehmen. Einstellungen, die in dem automatischen Betriebsmodus 30 automatisch von der Steuereinheit 28 festgelegt werden, werden hier individuell vom Bediener festgelegt. Durch das Betätigungselement 46 bzw. die Tastatur 58 kann hierbei der Bediener einen individuell gestalteten Messmodus kreieren und diesen in der Speichereinheit 68 abspeichern. In diesem individuell kreierten Messmodus wird vom Bediener beispielsweise entschieden, welche Sensoreinheiten 22, 24, 26 sowie welche Auswahl der jeweiligen Sensorelemente 50, 52, 54 für die Messung aktiviert werden und/oder es wird eine Auswahl der Signalverarbeitungsmodule 34, 36, 72, 74 sowie deren Abfolge und/oder der Signalverarbeitungsroutinen 40, 42 während des Messbetriebs durch den Bediener festgelegt. Der Bediener tätigt hierbei eine Eingabe über die Tastatur 58, wobei ein Eingabeparameter 78 an die Steuereinheit 28 geleitet wird und die von dem Bediener gewünschten Einstellungen aktiviert. Zudem werden auch die für einen Ablauf erforderlichen Eingaben von Parametern 38 für die Signalverarbeitungsmodule 34, 36, 72, 74 hierbei durch den Bediener vorgeben. Des Weiteren kann von dem Bediener eine Darstellung der Messergebnisse auf dem Display individuell gestaltet werden, indem eine Auflösung des Displays und/oder eine Art der Objektdarstellung und/oder Bereichsauswahl eines angezeigten Messwertebereichs bzw. Dynamikbereichs von dem Bediener durch Eingabe entsprechender Parameter festgelegt wird. Die von dem Bediener in dem manuellen Betriebsmodus 32 ausgewählten Parameter und/oder Signalverarbeitungsroutinen 40, 42 können zudem in der Speichereinheit 68 gespeichert werden.

Weiterhin kann der Bediener in dem manuellen Betriebsmodus 32 benutzerdefinierte Signalverarbeitungsroutinen 40, 42 erstellen oder eine bereits bestehende Signalverarbeitungsroutine 40, 42 auf eine neue Messsituation abändern und in der Speichereinheit 68 abspeichern, wobei die benutzerdefinierte Signalverarbeitungsroutine 40, 42 eine Auswahl an Signalverarbeitungsroutinen 40, 42 erweitert und diese auch von der Steuereinheit 28 in dem automatischen Betriebsmodus 32 ausgewählt werden kann. Die benutzerdefinierten bzw. die abgeänderten Signalverarbeitungsroutinen 40, 42 sind für eine spezielle Anwendung bzw. Messsituation vorgesehen. Der Bediener kann hierbei selbst definierte und/oder gewählte Parameter und/oder eine spezielle Auswahl an Signalverarbeitungsmodulen 34, 36, 72, 74 erstellen und diese in einer selbst erstellten Signalverarbeitungsroutine 40, 42 abspeichern. Zudem können auch weitere Signalverarbeitungsroutinen 40, 42 die der Bediener vom Hersteller des Ortungsgeräts 12 erhält, nachträglich auf die Ortungseinheit 14 überführt werden. Hierzu weist die Steuereinheit 28 eine Programmiereinheit 44 auf, mittels der ein Abändern oder ein Neuerstellen von Signalverarbeitungsroutinen 40, 42 bei einer Eingabe über die Tastatur 58 für den Bediener möglich ist.

Das Ortungsgerät 12 weist zudem eine Schnittstelle 48, wie insbesondere eine serielle Schnittstelle 48 und/oder proprietäre Schnittstelle 48 und/oder parallele Schnittstelle 48 und/oder eine IR-Schnittstelle 48 und/oder eine Funkschnittstelle und/oder eine Speicherkarte und/oder eine USB-Schnittstelle 48 und/oder eine Bluetooth-Schnittstelle 48, für einen Datenaustausch mit einer externen Einheit 80, wie beispielsweise einen PC, auf. Es können hierbei Parameter und/oder Signalverarbeitungsroutinen 40, 42 und/oder Signalverarbeitungsmodi 34, 36, 72, 74, die individuell von dem Bediener zusammengestellt werden und/oder nachträglich dem Bediener vom Hersteller zugestellt werden, auf das Ortungsgerät 12 komfortabel übertragen werden. Zudem können hierbei benutzerdefinierte Signalverarbeitungsroutinen 40, 42 und/oder Signalverarbeitungsmodi 34, 36, 72, 74 mittels der externen Einheit 80 erstellt werden und auf das Ortungsgerät 12 komfortabel übertragen werden.

## Patentansprüche

1. Ortungsvorrichtung, insbesondere handgeführtes Ortungsgerät (12), mit einer Ortungseinheit (14), die zu einer Erfassung eines Vorhandenseins eines in einem Untersuchungsobjekt (16) angeordneten Gegenstands (18) mittels eines Messsignals (20) vorgesehen ist und die zumindest eine Sensoreinheit (22, 24, 26) und eine Steuereinheit (28) mit zumindest zwei Betriebsmodi (30, 32) aufweist, **dadurch gekennzeichnet, dass** zumindest ein Betriebsmodus (30) von einem automatischen Betriebsmodus (30) gebildet ist.

2. Ortungsvorrichtung nach Anspruch 1, **dadurch gekennzeichnet, dass** die Steuereinheit (28) in dem automatischen Betriebsmodus (30) nach Erfassen zumindest eines Messparameters durch die Sensoreinheit (22, 24, 26) automatisch zumindest einen Betriebsparameter auswählt.

3. Ortungsvorrichtung nach Anspruch 2, **gekennzeichnet durch** eine Anzeigeeinheit (56), wobei eine aktuelle Einstellung und/oder Auswahl des automatischen Betriebsmodus (30) und/oder des zumindest einen Betriebsparameters mittels der Anzeigeeinheit (56) optisch darstellbar ist.

4. Ortungsvorrichtung nach einem der vorhergehenden Ansprüche, **gekennzeichnet durch** zumindest zwei unterschiedliche Signalverarbeitungsmodule (34, 36, 72, 74), die von der Steuereinheit (28) in zumindest einem der Betriebsmodi (30, 32) auswählbar sind.

5. Ortungsvorrichtung nach Anspruch 4, **dadurch gekennzeichnet, dass** die Steuereinheit (28) zu einer variablen Abfolge der zumindest zwei Signalverarbeitungsmodule (34, 36, 72, 74) abhängig von zumindest einer Kenngröße eines sensierten Messsignals vorgesehen ist.

6. Ortungsvorrichtung zumindest nach Anspruch 4, **dadurch gekennzeichnet, dass** die Steuereinheit (28) in dem automatischen Betriebsmodus (30) zu einer automatischen Einstellung zumindest eines Parameters für das ausgewählte Signalverarbeitungsmodul (34, 36, 72, 74) vorgesehen ist.

7. Ortungsvorrichtung nach einem der vorhergehenden Ansprüche, **gekennzeichnet durch** zumindest zwei Signalverarbeitungsroutinen (40, 42) für zumindest zwei unterschiedliche Anwendungen.

8. Ortungsvorrichtung nach Anspruch 7, **dadurch gekennzeichnet, dass** die Steuereinheit (28) in dem automatischen Betriebsmodus (30) zu einer Auswahl einer geeigneten Signalverarbeitungsroutine (40, 42) für die jeweilige Anwendung vorgesehen ist.

9. Ortungsvorrichtung nach einem der vorhergehenden Ansprüche, **dadurch gekennzeichnet, dass** der weitere Betriebsmodus (32) von einem manuellen Betriebsmodus (32) gebildet ist.

10. Ortungsvorrichtung nach Anspruch 9, **dadurch gekennzeichnet, dass** die Steuereinheit (28) eine Programmiereinheit (44) aufweist, die in dem manuellen Betriebsmodus (32) zu einer Eingabe zumindest einer benutzerdefinierten Signalverarbeitungsroutine (42) vorgesehen ist.

11. Ortungsvorrichtung nach Anspruch 9 und/oder 10, **dadurch gekennzeichnet, dass** die Ortungseinheit (14) zumindest eine Speichereinheit (68) aufweist, in der ein gewähltes Parameterset in dem manuellen Betriebsmodus (32) und/oder der benutzerdefinierten Signalverarbeitungsroutine (42) speicherbar ist.

12. Ortungsvorrichtung zumindest nach Anspruch 10, **dadurch gekennzeichnet, dass** die Steuereinheit (28) in dem automatischen Betriebsmodus zu einer Auswahl der benutzerdefinierten Signalverarbeitungsroutine (42) vorgesehen ist.

13. Ortungsvorrichtung zumindest nach Anspruch 9, **gekennzeichnet durch** ein Betätigungselement (46), das zu einer Auswahl eines der zumindest zwei Betriebsmodi (30, 32) **durch** einen Bediener vorgesehen ist.

14. Ortungsvorrichtung nach einem der vorhergehenden Ansprüche, **gekennzeichnet durch** eine Schnittstelle (48), die zu einer Datenübertragung vorgesehen ist.

15. Ortungsvorrichtung, insbesondere handgeführtes Ortungsgerät (12), mit einer Ortungseinheit (14), die zu einer Erfassung eines Vorhandenseins eines in einem Untersuchungsobjekt (16) angeordneten Gegenstands (18) mittels eines Messsignals (20) vorgesehen ist und die zumindest eine Sensoreinheit (22, 24, 26) und eine Steuereinheit (28) mit zumindest zwei Betriebsmodi (30, 32) aufweist, insbesondere nach einem der vorhergehenden Ansprüche, **dadurch gekennzeichnet, dass** zumindest ein Betriebsmodus (30) von einem manuellen Betriebsmodus (30) gebildet ist.

16. Verfahren, insbesondere für eine Ortungsvorrichtung (10) nach einem der vorhergehenden Ansprüche, mit einem ersten Betriebsmodus (30) und einem zweiten Betriebsmodus (32), **dadurch gekennzeichnet, dass** der erste Betriebsmodus (30) von einem automatischen Betriebsmodus (30) gebildet wird.

17. Verfahren nach Anspruch 16, **dadurch gekennzeichnet, dass** der zweite Betriebsmodus (32) von einem manuellen Betriebsmodus (32) gebildet wird.
